# EUROPEAN PATENT SPECIFICATION

(11) **EP 2 062 199 B1**
(45) Date of publication and mention of the grant of the patent: **16.11.2011**
(21) Application number: 07802268.8
(22) Date of filing: 11.09.2007
(51) Int. Cl.: G06K 17/00, G06K 13/07, G07F 7/10

(54) **DEVICE AND METHOD FOR HANDLING OBJECTS**
EINRICHTUNG UND VERFAHREN ZUM UMGANG MIT OBJEKTEN
DISPOSITIF ET PROCÉDÉ PERMETTANT LA MANIPULATION D'OBJETS

(30) Priority: 13.09.2006 DE 102006042957
(43) Date of publication of application: 27.05.2009
(73) Proprietor: Atlantic Zeiser GmbH, 78576 Emmingen (DE)
(72) Inventor: KNOF, Brigitte, 33813 Oerlinghausen (DE); BRÄUTIGAM, Andreas, 33165 Lichtenau (DE); NIGGEMEIER, Thomas, 33106 Paderborn (DE); SEEMANN, Volker, 33102 Paderborn (DE)
(74) Representative: Ullrich & Naumann
(86) International application number: PCT/EP2007/007918
(87) International publication number: WO 2008/031570

(56) References cited:
- DE-A1- 10 106 754
- DE-A1- 10 252 555
- DE-A1- 19 943 285
- DE-T2- 60 022 073
- US-A1- 2005 218 212

## Description

The present invention refers to devices and methods for handling objects, which are capable of bringing objects into a plurality of receiving positions and of taking them from this receiving position. In particular, the present invention can find an application when flat objects, for example smart cards, identity cards in the form of a card, passport books or also plug-ins, e.g. SIM cards, are to be handled, for example are to be temporarily stored in a buffer or are to be personalised.

Smart cards and similar objects must be personalised before their use, which means that personal characteristics are inserted into the smart card. These can be electronic data, which are written into a memory by means of electrical signals. They can however also be magnetic data, which are written on a magnetic track. Likewise, writing in plain text or by means of embossed characters in a personalisation station is also possible. The personalisation occurs in so-called personalisation stations, which apply the characteristics on the objects.

There are known personalisation plants, which permit writing in parallel on smart cards, the smart cards being supplied and evacuated by a transport system.

For example, in EP 0 266 926 A2 is described a system for the personalisation of smart cards with a conveyer system that brings the cards into personalisation stations, which are arranged circularly and are moved in a circle. The ring turns from the input station to the output station with a signal element timing such that the maximum time needed for the personalisation is maintained. This system can work only with a fixed number of personalisation stations and cannot react to individual personalisation times. It always operates with the slowest necessary signal element timing. Furthermore, all the circularly arranged personalisation stations are continuously accelerated and decelerated, which is complex and reduces the system's reliability. A disadvantage is furthermore the fact that a data transmission to the personalisation stations should occur through sliding contacts or an expensive wireless transmission, since, in the case of a data transmission through fixed contacts, large wire strips would also have to be displaced, which, on the one hand, considerably increases the complexity and, on the other hand, gives rise to problems regarding the reliability of the electrical contacts. Comparable problems also arise with the other known solutions, which are outlined hereinafter, in which the personalisation stations are displaced.

From DE 197 09 561 C2 is known a plant for processing smart and/or magnetic-strip cards, which conveys a card magazine, two or more smart and/or magnetic-strip processing stations, at least one card-body processing station for applying non-modifiable data onto the card body and a card-conveying system, which conveys the cards from the card magazine to the smart and/or magnetic-strip processing station and afterwards to the card-body processing station or stations and from there to a further destination. According to this document, it is necessary to go through the personalisation stations in a predetermined way, wherefore a flexible operation is not possible. Furthermore, this plant is of a complex design and requires much operating space.

From DE 102 52 555 A1 is known a coding device for smart cards, in which a conveying path is divided into several conveying sections, a first conveying-path section of which is arranged in a first elevator, thereafter several magazine sections are arranged above each other in a magazine, and thereafter a further path section is arranged in a second elevator. In each of the magazine path-sections is arranged a contact set, which is mutually brought into contact, in activated state, with an associated transport roller, when first control means at the first path section has pushed it into contact, until second control means at the second path section has disconnected it and activated the associated transport roller for conveying. The coding device described in this document is complex, since two elevator mechanisms are provided, which require separate drives. Furthermore, the respective magazine compartments in which the cards are coded are complex, since each of them should include a path section with an associated drive mechanism.

From DE 600 22 073 T2 is known a card-generation system having a plurality of modules, at least two of them having a first and a second IC-card programming module, the first and the second IC-card programming module having a card path, card-transporting means for transporting a card along the card path and means for moving a plurality of card-programming stations along an axis, which is substantially perpendicular to the card path. Each programming station has a place for holding the card while the same is programmed, the means being formed so as to selectively align the places of the programming stations with the card path, so that a card can penetrate into a programming station and be pushed out of the latter, each card-programming station being formed so as to permit that a card can pass through it without programming and without any action on the card. According to this document, programming stations are thus moved in order to bring them into a card path, which is also complex and diminishes the reliability of the system.

Finally, from DE 199 43 285 A1 is known a device for performing multiple contacting of smart cards, which has transport means stepwise transporting the smart cards and several work stations combined into a working unit. Next to the transport means is arranged a cyclically vertically displaceable contacting tower, which contains several superimposed levels of work stations combined into working units, the levels of the work stations being arranged parallel to the level of the transport means and the contacting tower being formed open at least on one side. Smart-card blanks are transported by first transport means next to the contacting tower and entered by transfer means into a first level of the latter, smart cards present at this level and already processed being brought from this level to second transport means. Then the contacting tower is displaced by one level and this next level is equipped in the same way. After completion of the equipping of the entire contacting tower, the entire contacting tower is quickly brought into the starting position. At this time, at least the contacting of the chips at the first level must be completed. DE 199 43 285 A1 thus teaches a processing in parallel of smart cards, however according to a fixed predetermined scheme, which does not permit a flexible operation. Furthermore, according to this document, the work stations are also moved, which is again complex and reduces the reliability of the system.

The object of the present invention is to create a device and a method for handling objects, which allow a high degree of flexibility, require a reduced floor space and provide high reliability.

This object is solved by a device for handling objects according to claim 1 and a method for handling objects according to claim 15.

The present invention provides a device for handling objects, comprising a plurality of receiving positions, which are designed, each, so as to receive an object; at least one transportation module that comprises at least one first object-storage area, at least one second object-storage area, and loading/unloading means; and driving means comprising a support supporting the transportation module, the driving means for positioning the transportation module with respect to the plurality of receiving positions, wherein the at least one first object-storage area, the at least one second object-storage area and the loading/unloading means are positionable at a loading/unloading position with respect to one of the receiving positions by a movement of the support; wherein the loading/unloading means is designed to move, at the loading/unloading position, from the at least one first object-storage area through an associated receiving position of the plurality of receiving positions to the at least one second object-storage area for simultaneously loading a first object from the at least one first object-storage area into the associated receiving position and unloading a second object from the associated receiving position into the at least one second object-storage area.

Furthermore, the present invention provides a method for handling objects, comprising the steps of moving a support supporting a transportation module with respect to a plurality of receiving positions, to position the support at a loading/unloading position with respect to one of the receiving positions, the transportation module comprising a first object-storage area, a second object-storage area and loading/unloading means; and moving the loading/unloading means, at the loading/unloading position, from the first object-storage area through an associated receiving position of the plurality of receiving positions to the second object-storage area for simultaneously loading a first object from the first object-storage area into the associated receiving position and unloading a second object from the associated receiving position into the second object-storage area.

According to the present invention, there is provided a transportation module, which has at least two object-storage areas and means for moving objects between these object-storage areas and a receiving position. According to the invention, both the object-storage areas and the means for loading and unloading are thus positioned with respect to a receiving position, which permits that corresponding loading/unloading means do not have to be provided for each receiving position. According to the invention, the receiving positions can be arranged in a fixed position, vertically above each other or horizontally next to each other. In exemplary embodiments of the invention, processing stations and in particular personalisation stations are associated to each of the receiving positions, whereby the latter can also be arranged in a fixed position, so that complex driving means for the latter, which diminish the reliability, can be avoided.

In exemplary embodiments of the invention, the driving means is formed so as to move the transportation module along a linear displacement path, which permits a simple construction of the driving means. In further exemplary embodiments, the driving means can have means (linear unit) fixing such a linear displacement path, e.g. a rail, and a driving motor, in order to move the transportation module along this means. Furthermore, several driving means can be provided, in order to move several transportation modules along the linear unit. Alternatively, one or more driving means can be provided, which permits or permit a free movement of one or more transportation modules with respect to a plurality of receiving positions, which provides the highest possible flexibility.

In exemplary embodiments of the invention, the several receiving position form a pile of receiving positions, which has receiving positions arranged vertically above each other. Several such receiving piles arranged next to each other can be provided. A transportation module with associated driving means can be provided for each receiving pile. Alternatively, a transportation module can be provided with such driving means, which also permits a movement between piles of receiving positions, so that all receiving positions of several piles of receiving positions can be reached by a transportation module.

In exemplary embodiments of the invention, the driving means is formed so as to move the transportation module from a position at which the first object is transferred by an upstream station of an object-processing plant to the first object-storage area and at which the second object is transferred from the second object-storage area to a downstream station of an object-processing plant, and the loading/unloading position with respect to a receiving position. At the first-mentioned position, the transportation module is preferably located at an object-transportation level of an object-processing plant, so that the objects can be easily transferred to the upstream and downstream stations of the object-processing plant.

In exemplary embodiments of the invention, the driving means is formed so as to position the transportation module in the loading/unloading position of a freely selectable one of several receiving positions. The driving means has, in exemplary embodiments, a control unit, which is formed so as to select the freely selectable receiving position depending on control signals, which indicate whether an object can be taken off the corresponding receiving position. For example, the control signals can indicate that an object located in the corresponding receiving position has been personalised. Thus, the present invention permits to equip the receiving positions, which can include in particular processing stations or personalisation stations, as soon as a processing or a personalisation has been completed, which allows an object to be directly taken off a receiving position, as soon as the processing or personalisation of the same has been completed.

In exemplary embodiments of the invention, a first plurality of receiving positions, which have means for acting on an object in a first way, can be provided with an associated transportation module, and a second plurality of receiving positions, which have means for acting on an object in a second way, which can differ from the first way, can be provided with an associated transportation module. Means can be provided for transferring an object from the transportation module associated with the first plurality to the transportation module associated with the second plurality. In other words, in exemplary embodiments of the invention, several arrangements of personalisation stations can be arranged in cascade behind each other, in order to thus increase the throughput of personalisation operations in a plant. It can be advantageous to proceed in the respective arrangements to different kinds of personalisation. Thus, there can be proceeded to an electrical personalisation of smart cards in a first arrangement, while there can be proceeded to their laser writing in a second arrangement. In different processing modes, a number of processing stations can advantageously be determined in a respective arrangement by the relative duration of the respective treatment. For the processing mode with the largest processing time can be provided most processing stations, while for the other processing modes with shorter processing times can be provided fewer processing stations. A uniform throughput in the entire plant can thus be achieved.

In exemplary embodiments of the invention, the receiving positions can represent pure buffer positions, i.e. intermediate storage positions, in order to form a card-buffer station. Thus, the present invention could be used for example between two systems for transferring objects between the systems, for example in order to buffer varying clock cycles of the systems or short stops of one of the systems, without.reducing the throughput of others. Exemplary embodiments of the invention permit that the receiving positions or processing stations, in which objects are to be supplied or from which objects are to be taken are determined by a control unit independently from each other, no sequence having to be observed. Furthermore, exemplary embodiments of the invention permit that objects, which do not require a respective type of processing are simply pushed through the corresponding processing station, so that a uniform flow can be maintained for several objects that require different processing.

The present invention thus permits in a flexible way an effective execution in parallel of operations of buffering, processing or personalisation of objects. In particular, the invention is suitable for handling flat objects, in particular smart cards, plug-ins (such as SIM cards), magnetic-strip cards, identification documents such as identity cards in the form of a card or passport books and the like, and in particular for handling such documents, in order to achieve a personalisation of the same. To this end, adequate personalisation means can be associated with the respective receiving positions, for example in order to personalise an object by means of electrical signals via contact pins, contactless or by means of laser writing. For example, the personalisation stations could also be formed so as to write magnetic data on a magnetic track.

Preferred exemplary embodiments of the present application are described in more detail, with reference to the attached drawings, in which:
Fig. 1 shows a schematic plan view of an exemplary embodiment of a device according to invention;
Fig. 2 shows a schematic side view of an exemplary embodiment of a device according to invention;
Fig. 3 shows an isometric view from below of an exemplary embodiment of a personalisation station;
Fig. 4 shows an isometric view from above of the personalisation station shown in Fig. 3;
Fig. 5 schematically shows an arrangement in cascade of two devices as shown in Fig. 1;
Fig. 6 shows a schematic representation of an exemplary embodiment of a device according to invention; and
Fig. 7a-7c show schematic representations of different exemplary embodiments of the invention.

In the following description of preferred exemplary embodiments, the present invention is described based on smart cards and personalisation stations, whereby it is however clear that the present invention is also applicable to other objects and receiving positions.

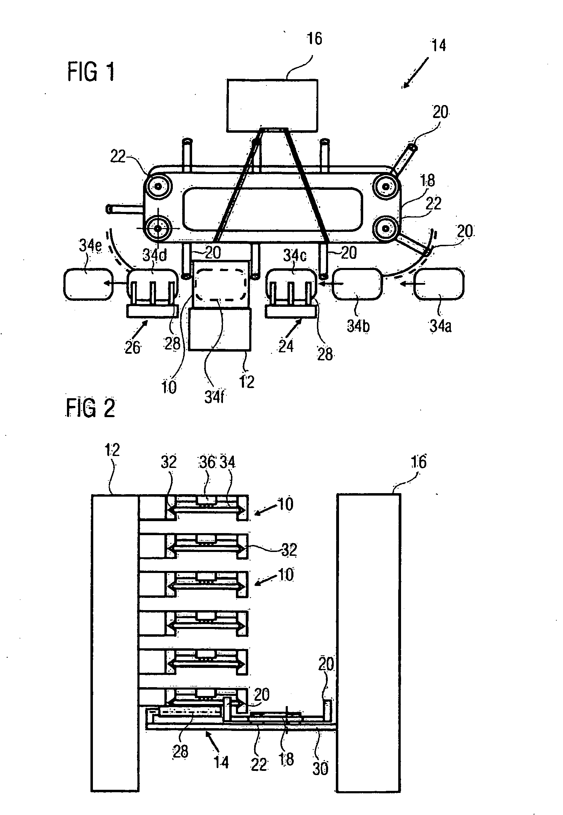

Fig. 1 schematically shows a personalisation plant for smart cards in plan view, while in Fig. 2 is shown a side view of the same.

Several personalisation stations, two of which are designated in Fig. 2 by way of an example by reference numeral 10, are arranged vertically above each other on a support 12. A transportation module 14 and driving means 16 are provided, the driving means 16 permitting a vertical displacement of the transportation module 14, in order to position the same in a loading/unloading position with respect to one of the personalisation stations 10. In Fig. 2, the transportation module is arranged in the loading/ unloading position with respect to the lowest personalisation station 10.

The transportation module 14 includes a continuous conveyer belt 18, on which are fixed catch pins 20, which can be referred to as cams. The cams 20 can for example be welded to the continuous conveyer belt 18. The conveyer belt 18 is guided on rollers 22, at least one of which can be driven, in order to thus cause a displacement of the continuous conveyer belt 18 and, hence of the catch pins 20. The transportation module includes, furthermore, smart card storage areas 24 and 26, the storage area 24 representing a storage area for supplying a smart card into the personalisation station 10 and the storage area 26 representing a storage area for taking a smart card from the personalisation station 10. The smart card storage areas 24 and 26 have respective rollers 28, through which smart cards can be transported. For example, the smart cards can be held and guided in the roller gap between opposite rollers, which are adequately pre-tensioned against each other. The smart card storage areas 24 and 26 as well as the rollers 22, which, together with the continuous conveyer belt 18 and the catch pins 20, form a cam drive, are adequately maintained on a support 30 of the transportation module, through which the transportation module can be displaced vertically by the driving means 16. Alternatively, the transportation module can have, instead of the guiding rollers, e.g. spring-loaded guides into which the cards are inserted, and by which the cards are held while the transportation module is moved.

As can be seen in Fig. 2, the personalisation stations 10 include, each, opposite guiding grooves 32, which are adapted for receiving a smart card 34, for inserting it into the personalisation station and for maintaining it in the latter. The Personalisation stations include, furthermore, a contact head 36, which is vertically movable in the personalisation station, so that the latter can be lowered onto the smart card 34, in order to perform, through respective contacts of the latter, contacts on the smart card.

In operation, the transportation module 14 is first moved by means of the driving means 16 into a position, in which a smart card can be taken from a preceding station or a preceding module of a card-processing path. To this end, the transportation module 14 is brought at the card transportation level of the card-processing path, whereby the card-transportation level can for example be located under the pile of personalisation stations 10 shown in Fig. 2. In this position, a card is transferred from a module arranged upstream in the card path, for example in that the continuous conveyer belt 18 is operated so that the card is transported, by means of a catch pin 20, from a preceding module onto the smart-card storage area 24. This operation is shown in Fig. 1 by the card positions 34a, 34b and 34c, the card being in the position 34c on the smart-card storage area 24. The transfer of the smart card from the preceding module can occur e.g. in that the preceding module pushes the smart card into a position in which it can be engaged by one of the catch pins 20 and pushed onto the storage area 24.

At the same time, at this position, a smart card, which is at position 34d, can be transferred to a following module of the card-processing path, as shown by the card positions 34d and 34e in Fig. 1. To this end, one of the catch pins 20 engages the card present at the position 34d and pushes it off the storage area 26, whereupon the card can be taken over by a suitable catch pin of a following module. The arrows in Fig. 1 represent a card-displacement direction between the card positions.

Thus, a smart card received from the preceding module is located in the storage area 24, while the storage area 26 is empty. The transportation module 14 is then moved vertically by means of the driving means 16, which can be formed for example by an elevator, and the smart card present in the storage area 24 is brought to the level of the personalisation station into which the smart card is to be inserted. During this movement, the two smart-card storage areas 24 and 26 and the continuous conveyer belt 18, the catch pins 20 and the rollers 22 are brought together into a loading/unloading position with respect to the corresponding personalisation station 10, since all these components are carried by the transportation module. In the loading/unloading position, the continuous conveyer belt 18 is activated, so that one of the catch pins 20 pushes the smart card present at the storage area 24 from the rollers 28 into the personalisation station 10. At the same time, another catch pin 20 pushes a card present in the personalisation station, which is indicated in Fig. 1 by the position 34f, onto the rollers 28 of the smart-card storage area 26. Thus, a smart card not yet personalised was pushed from the storage area 24 into the personalisation station, while a personalised smart card was pushed from the personalisation station 10 onto the storage area 26.

Afterwards, the transportation module 14 is again moved vertically by the driving means into the position in which the card present in the storage area 26 can be transferred to a following module and another card to be personalised can be taken over from a preceding module.

As soon as a card has been brought into a personalisation station and the personalisation has begun, the transportation module can thus, by means of the driving means, be moved again to the card-transportation level, in order to receive the next card. When all the personalisation stations are equipped with cards and the personalisation in the first filled unit has been completed, the transportation module can, as a matter of fact, again be moved with a new received card to this station, in order to take the personalised card from the personalisation station and to insert the new card into the same.

In the described exemplary embodiment, the rollers 28 facilitate the pushing of the respective card from and onto the storage areas 24 and 26. In the personalisation station, the respective card 34 is guided and held by the grooves 32. While the smart card 34 is present in the personalisation station 10, the contact head 36 is lowered in order to come into contact with the smart card and to personalise it, i.e. in order to insert characteristics related to a person into the smart card or to apply them on the same. Such personalisation can occur in any known way, for example in that electrical signals are written into a memory, or in that magnetic data are written on a magnetic track. This can occur both through contact and contactless. Furthermore, in the personalisation.station can take place a writing in plain text or through embossed characters. As soon as the personalisation is completed, the smart card can again be removed from the personalisation station. A control unit (not shown) can have knowledge of the respective personalisation time and, based on this knowledge, control the transportation module, in order to remove, as efficiently as possible, personalised cards from the respective personalisation stations 10 and to bring new cards to be personalised into the latter. The control unit can furthermore be formed so as to adjust the transportation speed of the transportation module 14 for an efficient operation. The individual personalisation stations can, furthermore, deliver control signals to the control unit, which indicate that the personalisation of an object has been completed, so that the control unit controls, based on these control signals, the movement of the transportation module and thus the selection of a personalisation station 10.

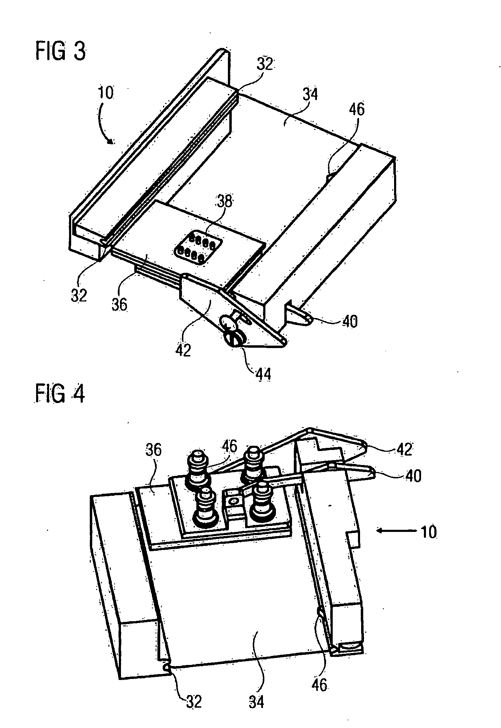

Fig. 3 represents a view from below of a personalisation station 10, while Fig. 4 represents a view from above of the same. The personalisation station 10 includes the guiding grooves 32 and the contact head 36, which is provided with contacts 38. A lever 40 is provided in order to raise and lower the contact head 36 or the contact pins 38 of the same, in order to allow performing the contacting of a smart card. A stop 42 is provided, which can be pivoted about a pivoting axis 44, in order to move the same into and from a card path. A smart card 34 is represented in Fig. 3 transparent and with a broken line.

A smart card is pushed by one of the catch pins 20 along a card path, which is fixed by the grooves 32, into the personalisation station, until it reaches the stop 42. The smart card is now in the position for a personalisation, so that the contact pins 38 are lowered, through the lever 40, onto the smart card and contact and personalise the latter. After the personalisation, the stop 42 is pivoted out of the card path and the card 34 is engaged by one of the catch pins 20 and pushed onto the storage area 26. In Fig. 4 are represented, furthermore, sliding bearings 46 through which the contact head 36 is guided in parallel, in order to enter into contact with a smart card.

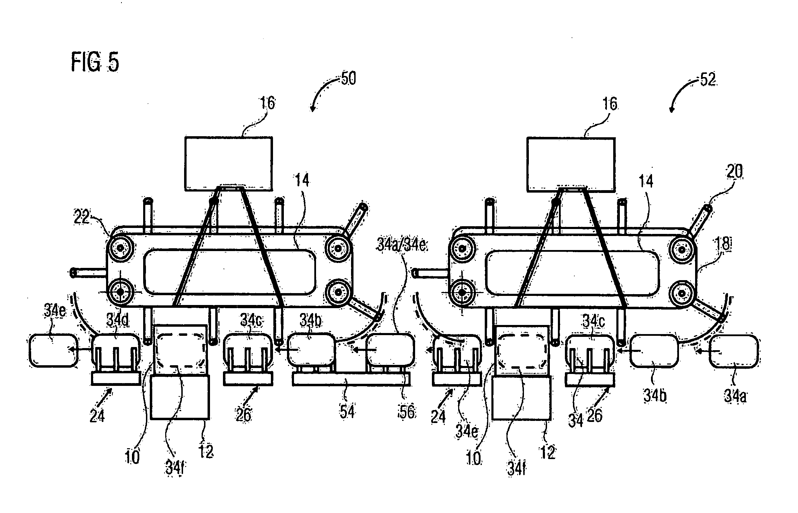

In Fig. 5 are represented in cascade two devices according to Fig. 1, identical elements in both devices being designated with the same reference numerals. A card path through the devices in cascade is represented in Fig. 5 by the respective card positions and arrows. Each of the two devices in cascade 50 and 52 includes the transportation module 14 through which cards can be moved horizontally, thus perpendicularly to the direction of movement of the transportation module, by means of the continuous conveyer belt 18 and the catch pins 20. Arranged between the transportation modules in cascade is a card guide 54, which has rollers 56 by means of which a card is transferred from the device 52 to the device 50. In the arrangement shown, the position 34a associated with the device 50 and the position 34e associated with the device 52 coincide. In this exemplary embodiment in cascade, the device 52 thus represents a preceding module from which the transportation module 14 of the device 50 receives a smart card. Alternatively, the transportation modules can be formed so as to permit a direct transfer of objects between them, the transportation modules having, in such case, corresponding transfer means.

In preferred exemplary embodiments of the present invention, a personalisation of smart cards occurs in a fixed tower takes place in which personalisation units are arranged vertically above each other. For example, 30 personalisation stations or personalisation units can be arranged in such a tower or pile, whereby the distance of the cards between the individual units can be of about 30 mm, so that an overall height of 900 mm would be obtained. Linear driving means for moving an associated transportation module would be somewhat longer, due to the necessary connection points at the ends, so that the overall height would be somewhat larger.

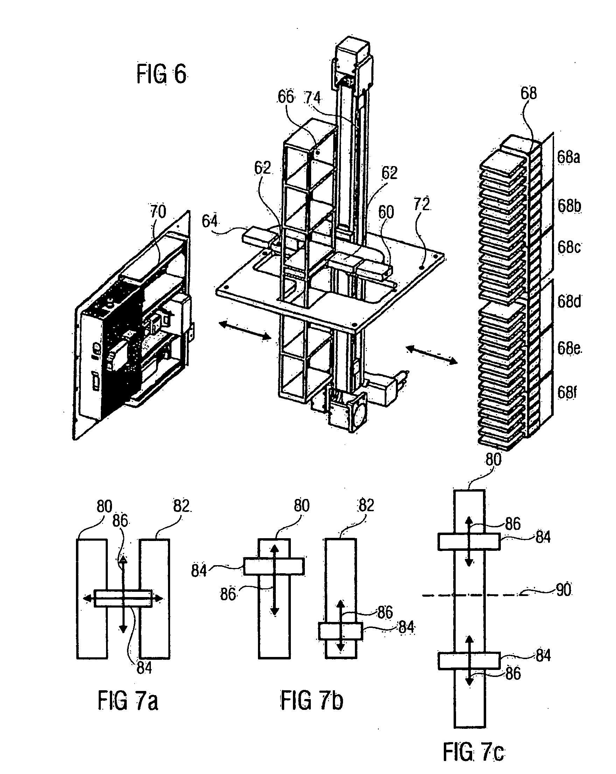

In exemplary embodiments of the invention, the transportation module can include a roller drive, which receives a card from a preceding module and transports it until the driving pulley of the same moves freely. Fig. 6 shows a schematic view in which such a roller drive is schematically represented as block 60. The cam drive described, which has the continuous conveyer belt 18, the catch pins 20 and the rollers 22, is schematically represented in Fig. 6 by blocks 62. After a card has been positioned by the roller drive 60, it is transported by the cam drive 62 into the personalisation unit, whereby it can be transported further, after successful personalisation, by the cam drive and transferred in the card-transportation level to a following module. Optionally, a further roller drive can also be provided here, as indicated by reference numeral 64 in Fig. 6. In the example shown in Fig. 6 is provided a supporting tower 66 by which can be held a plurality of personalisation stations 68, which are shown separately in Fig. 6 for representation purposes. The tower 66 is formed so as to hold an arrangement 68a to 68f of 5 personalisation stations. Furthermore, in Fig. 6 is schematically shown a control module 70, also separately for representation purposes, which contains the electronic components for performing the control of all drives and actuators, which are necessary for the operation of the device or for the execution of the method.

Furthermore, in Fig. 6 is shown a mounting plate 72 on which can be mounted the components of the device represented. Furthermore, in Fig. 6 can be seen that the driving means has a rail 74, which provided a linear movement for the transportation module.

In exemplary embodiments of the invention can be provided two systems according to Fig. 6, which are arranged in a mirror-image arrangement with respect to each other, in that their mounting plates 66 are facing each other, so that a user located between the two systems has access to both systems, without being hindered by the rails of the driving means. The card-movement direction would be the same for both systems. Furthermore, a double card path could be provided at the inlet, one system receiving cards from a first card path and the other system receiving cards from a second card path. After personalisation of the cards by the two systems, the latter could then be transferred into a common card path at the outlet.

Figs. 7a to 7c show only schematically how flexibly the present invention can be used.

Thus, Fig. 7a shows two piles of personalisation stations 80 and 82 arranged next to each other and a transportation module 84, which can be moved in at least two directions perpendicular to each other with respect to the piles 80 and 82, as shown by the arrows 86 in Fig. 7a. Thus, each personalisation station of the two piles 80 and 82 can be reached by the transportation module.

According to Fig. 7b, two piles of personalisation stations 80 and 82 are provided, to each of them being however associated one single transportation module 84, which are each movable only linearly in one direction, as indicated by arrows 86 in Fig. 7b.

Finally, Fig. 7c shows a variant in which to one of the piles of personalisation stations 80 are associated two transportation modules 84, which are each movable linearly in one direction, see arrows 86. In this exemplary embodiment can be used for example a linear unit with a linear motor on which can be moved several transportation modules movable independently from each other. The upper transportation module can supply personalisation stations above a system card-path level 90, while the lower transportation module can supply personalisation stations below the system card-path level. In such an exemplary embodiment, it is preferably ensured by the control unit that no unintentional meeting of the two transportation modules occurs. The system card-path level can, as shown, be arranged centrically with respect to the rail or can be offset upward or downward, so that there is no symmetrical division of the receiving positions with respect to the system card-path level.

The present invention permits a vertical or horizontal arrangement of the receiving positions or personalisation stations. Alternatively, the latter can however also be arranged according to arbitrary angles or irregularly, for example at different distances.

Alternatively to the exemplary embodiment described, each transportation module can have more than 2 card-storage areas. Then, means can be provided for moving an object between the object-storage areas. For example, two objects could be received, before one of these objects is brought into a receiving position by the transportation module. In the same way, two objects could be taken from receiving positions, before they are transferred to a downstream module. Furthermore, cards arranged on two storage areas of the transportation module could simultaneously be transferred to the receiving positions of two piles of personalisation stations arranged next to each other, while two cards are simultaneously received from the receiving positions in two further storage areas of the transportation module, so that two cards can be transferred to personalisation stations and taken from the same with one displacement operation of the transportation module.

The present invention also allows passing objects or cards through receiving positions, without buffering, processing or personalising them. Such passing through can preferably occur in the card-transportation level, since it is then easily possible to pass for example a card identified as being defect, without having to personalise it, so that useless expenses can be avoided here.

The solution approach according to invention is characterised by a simple construction of the system, a good retrofitting possibility on the site, the use of known technologies, many repeated parts, high transportation speed of the elevator, a good manufacturing cost-effective scalability, a good extension in the event of changed personalisation times and high flexibility. Thanks to a simple construction of the system using a known linear technique, the operation risk can be minimized and high reliability can be ensured. Furthermore, thanks to the reduced number of components required and the use of many identical parts, the cost can be reduced. The good retrofitting possibility on the site is provided by the good scalability of the mounting plate, for example the mounting plate 66 in Fig. 6. Such a mounting plate can, furthermore, have a basic unit without contacts at card-transportation level, which serves only for the transportation of cards, as shown in the centre of the mounting plate 66 of Fig. 6.

According to the invention, a device can have a first number of receiving positions, however not all of which are activated, so that a transportation module is moved only between a subset of the receiving positions. For example, the entire first number of receiving positions does not have to be reached if a second number of receiving positions, which is smaller than the first number, is enough to reach a determined throughput. Furthermore, for example receiving positions identified as being defect and associated processing stations can be deactivated, so that they are no longer reached.

In accordance with an arrangement the first and second object-storage areas of the device for handling objects comprise rollers for guiding the first and the second object or spring-loaded guides.

In accordance with an arrangement the driving means of the device for handling objects is designed so as to position the transportation module in the loading/unloading position of a freely selectable one of several receiving positions.

In accordance with an arrangement of the invention the device for handling objects comprises a control unit for the driving means, which is designed so as to select the freely selectable receiving position depending on control signals that indicate whether an object may be taken from the corresponding receiving position. The control signals indicate that an object present in the receiving position has been personalized.

In accordance with an arrangement the plurality of receiving positions of the device for handling objects are arranged stationary. In accordance with an arrangement of the invention several receiving positions of the device for handling objects form a pile of receiving positions, which comprises receiving positions arranged vertically above each other.

The device for handling objects comprises several piles of receiving positions arranged next to each other. A transportation module is provided for each pile of receiving positions.

In accordance with an arrangement the driving means of the device for handling objects comprises means fixing a linear displacement path and a driving motor, in order to cause a linear movement of the transportation module along the means fixing the linear movement path.

In accordance with an arrangement of the invention the device for handling objects comprises two transportation modules, which can be moved by a respective driving motor along means fixing a linear displacement path. In accordance with a further arrangement, a position at which the first object is received from an upstream station of an object-processing plant into the first object plant and/or the second object of the second object-storage area is transferred to a downstream station of an object-processing plant may be arranged at an intermediate position along the means fixing the linear displacement path.

In accordance with an arrangement the device for handling objects is designed so as to handle flat objects, in particular smart cards, plug-ins, magnetic-strip cards, identity cards in the form of a card or passport books.

In accordance with an arrangement the receiving positions of the device for handling objects comprise grooves through which an object is guided, during loading and unloading, into and out of the receiving position.

In accordance with an arrangement the loading/unloading means of the device for handling objects are designed so as to pass an object through a receiving position.

In accordance with an arrangement the means for personalizing are designed so as to personalize an object by means of electrical signals through contact pins or contactless, by means of magnetic signals or by means of laser writing.

In accordance with an arrangement the means for acting on an object are means for personalizing the object.

In accordance with an arrangement the device for handling objects comprises several transportation modules with associated driving means, the transportation modules being movable independently from each other.

In accordance with an arrangement the plurality of receiving positions of the device for handling objects are arranged vertically, horizontally or according to an angle with respect to an object-path level. In accordance with a further arrangement the plurality of receiving positions may be arranged symmetrically or asymmetrically with respect to the object displacement-path level.

In accordance with an arrangement the method for handling objects comprises a step of personalizing the object in the receiving position.

In accordance with an arrangement the method for handling objects comprises a step of determining a receiving position to which the transportation module has to be moved depending on whether an object may be taken out of the receiving position. In accordance with a further arrangement an object may be taken out of the receiving position when it has been personalized.

In accordance with an arrangement the method for handling objects comprises a step of moving at least two transportation modules along two displacement paths, which overlap at least partly, and a step of ensuring that no unintentional meeting of the two transportation modules occurs.

The scope of the invention is defined by the appended claims.

### List of reference numerals

- 10: Personalisation stations
- 12: Support
- 14: Transportation module
- 16: Driving means
- 18: Continuous conveyer belt
- 20: Catch pins
- 22: Rollers
- 24, 26: Smart-card storage areas
- 28: Rollers
- 30: Support
- 32: Guiding grooves
- 34: Smart card
- 3a-34f: Smart-card positions
- 36: Contact head
- 38: Contacts
- 40: Lever
- 42: Stop
- 44: Pivoting axis
- 46: Sliding bearing
- 50, 52: Handling devices
- 54: Card guide
- 60: Roller drive
- 62: Cam drive
- 64: Roller drive
- 66: Mounting plate
- 68: Pile of personalisation stations
- 68a-68f: Partial pile of personalisation stations
- 70: Control module
- 72: Mounting plate
- 74: Rail
- 80, 82: Pile of personalisation stations
- 84: Transportation module
- 86: Direction of displacement
- 90: System card-path level

## Claims

1. Device for handling objects (34), comprising:
a plurality of receiving positions (34f), which are designed, each, so as to receive an object (34);
at least one transportation module (14; 84) comprising:
at least one first object-storage area (24),
at least one second object-storage area (26), and
loading/unloading means (18, 20);
the device further comprising driving means (16) comprising a support (30) supporting the at least one transportation module (14; 84), wherein the driving means (16) is provided for positioning the at least one transportation module with respect to the plurality of receiving positions (34f), wherein the at least one first object-storage area (24), the at least one second object-storage area (26) and the loading/unloading means (18, 20) are positionable at a loading/unloading position with respect to one of the receiving positions by a movement of the support (30);
**characterized in that**
the loading/unloading means (18, 20) is designed to move, at the loading/unloading position, from the at least one first object-storage area (24) through an associated receiving position (34f) of the plurality of receiving positions to the at least one second object-storage area (26) for simultaneously loading a first object from the at least one first object-storage area (24) into the associated receiving position (34f) and unloading a second object from the associated receiving position (34f) into the at least one second object-storage area (26).

2. Device according to claim 1, wherein the receiving positions each comprise means for acting on and in particular for personalizing an object present in the same.

3. Device according to claim 1 or 2, wherein the loading/unloading means (18, 20) comprise an endless belt (18) to which are fixed a plurality of catch pins (20) for engaging the first and the second object.

4. Device according to one of claims 1 to 3, wherein the driving means (16) is designed so as to move the at least one transportation module (14; 84) along a linear displacement path.

5. Device according to one of claims 1 to 4, wherein the loading/unloading means (18, 20) are designed so as to move the first object and the second object in a direction perpendicular to a displacement direction of the at least one transportation module (14; 84).

6. Device according to one of claims 1 to 5, wherein to each receiving position is associated a processing station (10), and wherein the first and the second object-storage area (24, 26) are arranged with a gap, so that, when the at least one transportation module (14; 84) is moved along a processing station (10), the processing station (10) passes beyond the gap.

7. Device according to one of claims 1 to 6, wherein the driving means (16) is designed so as to move the at least one transportation module (14; 84) between a position in which the first object is received from an upstream station of an object-processing plant into the first object-storage area (24) and/or the second object is transferred from the second object-storage area (26) to a downstream station of an object-processing plant and the loading/unloading position with respect to a receiving position.

8. Device according to one of claims 1 to 7, comprising a control unit (70) for the driving means (16),
wherein the driving means (16) is designed so as to position the at least one transportation module in the loading/unloading position of a freely selectable one of several receiving positions,
wherein the control unit (70) is designed so as to select the freely selectable receiving position depending on control signals that indicate whether an object may be taken from the corresponding receiving position, and
wherein the control signals indicate that an object present in the receiving position has been personalized.

9. Device according to one of claims 1 to 8, comprising:
at least one further first object-storage area;
at least one further second object-storage area;
means for moving an object between the at least one first object-storage area (24) and the at least one further first object-storage area; and
means for moving an object between the at least one second object-storage area (24) and the at least one further second object-storage area.

10. Device according to one of claims 1 to 8, comprising:
at least one further first object-storage area;
at least one further second object-storage area;
wherein the loading/unloading means is designed so as to
unload two objects from at least two receiving positions onto the at least one first object-storage area (24) and the at least one further first object-storage area, and
load two objects from the at least one second object-storage area (24) and the at least one further second object-storage area into the at least two receiving positions.

11. Device according to one of claims 1 to 10, comprising two transportation modules (14, 84), which can be moved by a respective driving motor along means fixing a linear displacement path,
wherein a position at which the first object is received from an upstream station of an object-processing plant into the first object plant (24) and/or the second object of the second object-storage area (26) is transferred to a downstream station of an object-processing plant is arranged at an intermediate position along the means fixing the linear displacement path.

12. Device according to one of claims 1 to 11, wherein the plurality of receiving positions comprises a first plurality of receiving positions, which comprise means for acting on an object in a first way, with an associated transportation module, and a second plurality of receiving positions, which comprise means for acting on an object in a second way, which differs from the first way, with an associated transportation module.

13. Device according to one of claims 1 to 11, wherein the plurality of receiving positions comprises a first plurality of receiving positions with an associated transportation module and a second plurality of receiving positions with an associated transportation module, and transfer means (54, 56) for transferring an object from the transportation module associated with the first plurality to the transportation module associated with the second plurality.

14. Device according to one of claims 1 to 8, comprising several piles of receiving positions (80, 82) arranged next to each other, wherein the several receiving positions which form one pile of the several piles of receiving positions (80; 82) are arranged vertically above each other, and wherein a transportation module (14; 84) is provided for each pile of the several piles of receiving positions (80, 82).

15. Method for handling objects (34), with the following steps:
moving a support (30) supporting a transportation module (14; 84) with respect to a plurality of receiving positions (34f), to position the support at a loading/unloading position with respect to one of the receiving positions, the transportation module (14; 84) comprising a first object-storage area (24), a second object-storage area (26) and loading/unloading means (18, 20);
**characterized by**
moving the loading/unloading means (18, 20), at the loading/unloading position, from the first object-storage area (24) through an associated receiving position (34f) of the plurality of receiving positions to the second object-storage area (26) for simultaneously loading a first object from the first object-storage area (24) into the associated receiving position (34f) and unloading a second object from the associated receiving position (34f) into the second object-storage area (26).

## Patentansprüche

1. Vorrichtung zur Handhabung von Objekten (34), umfassend:
eine Mehrzahl von Aufnahmepositionen (34f), die jeweils ausgelegt sind, um ein Objekt (34) aufzunehmen,
mindestens ein Transportmodul (14; 84), das umfasst:
mindestens einen ersten Objektablagebereich (24),
mindestens einen zweiten Objektablagebereich (26), und
Lade-/Entlademittel (18, 20),
wobei die Vorrichtung ferner ein Antriebsmittel (16) umfasst, das einen Träger (30) umfasst, der das mindestens eine Transportmodul (14; 84) trägt, wobei das Antriebsmittel (16) zum Positionieren des mindestens einen Transportmoduls in Bezug auf die Mehrzahl von Aufnahmepositionen (34f) vorgesehen ist, wobei der mindestens eine erste Objektablagebereich (24), der mindestens eine zweite Objektablagebereich (26) und das Lade-/Entlademittel (18, 20) an einer Lade-/Entladeposition durch eine Bewegung des Trägers (30) in Bezug auf eine der Aufnahmepositionen positionierbar sind,
**dadurch gekennzeichnet, dass**
das Lade-/Entlademittel (18, 20) ausgebildet ist, um sich an der Lade-/Entladeposition von dem mindestens einen ersten Objektablagebereich (24) über eine zugeordnete Aufnahmeposition (34f) der Mehrzahl von Aufnahmepositionen in den mindestens einen zweiten Objektablagebereich (26) zu bewegen, um gleichzeitig ein erstes Objekt aus dem mindestens einen ersten Objektablagebereich (24) in die zugeordnete Aufnahmeposition (34f) zu laden und ein zweites Objekt aus der zugeordneten Aufnahmeposition (34f) in den mindestens einen zweiten Objektablagebereich (26) zu entladen.

2. Vorrichtung nach Anspruch 1, bei der die Aufnahmepositionen jeweils Mittel zum Einwirken auf und insbesondere zum Personalisieren eines in demselben befindlichen Objekts umfassen.

3. Vorrichtung nach Anspruch 1 oder 2, bei der die Lade-/Entlademittel (18, 20) ein endloses Band (18) umfassen, an dem eine Mehrzahl von Mitnahmestiften (20) für ein Eingreifen mit dem ersten und dem zweiten Objekt befestigt sind.

4. Vorrichtung nach einem der Ansprüche 1 bis 3, bei der das Antriebsmittel (16) so ausgelegt ist, dass es das mindestens eine Transportmodul (14; 84) entlang eines linearen Verlagerungswegs bewegt.

5. Vorrichtung nach einem der Ansprüche 1 bis 4, bei der die Lade-/Entlademittel (18, 20) so ausgelegt sind, dass sie das erste Objekt und das zweite Objekt in einer Richtung senkrecht zu einer Verlagerungsrichtung des mindestens einen Transportmodul (14; 84) bewegen.

6. Vorrichtung nach einem der Ansprüche 1 bis 5, bei der jeder Aufnahmeposition eine Verarbeitungsstation (10) zugeordnet ist, und bei der der erste und der zweite Objektablagebereich (24, 26) mit einem Zwischenraum angeordnet sind, so dass, wenn das mindestens eine Transportmodul (14; 84) entlang einer Verarbeitungsstation (10) bewegt wird, die Verarbeitungsstation (10) über den Zwischenraum hinausläuft.

7. Vorrichtung nach einem der Ansprüche 1 bis 6, bei der das Antriebsmittel (16) so ausgelegt ist, dass es das mindestens eine Transportmodul (14; 84) zwischen einer Position, in der das erste Objekt von einer vorgeschalteten Station einer Objektverarbeitungsanlage in den ersten Objektablagebereich (24) aufgenommen wird und/oder das zweite Objekt aus dem zweiten Objektablagebereich (26) in eine nachgeschaltete Station einer Objektverarbeitungsanlage übergeben wird, und der Lade-/Entladeposition mit Bezug auf eine Aufnahmeposition bewegt.

8. Vorrichtung nach einem der Ansprüche 1 bis 7, umfassend eine Steuereinheit (70) für das Antriebsmittel (16), wobei das Antriebsmittel (16) so ausgelegt ist, dass es das mindestens eine Transportmodul in der Lade-/Entladeposition einer frei wählbaren von mehreren Aufnahmepositionen positioniert,
wobei die Steuereinheit (70) so ausgelegt ist, dass sie die frei wählbare Aufnahmeposition abhängig von Steuersignalen auswählt, die angeben, ob ein Objekt aus der entsprechenden Aufnahmeposition entnommen werden kann, und
wobei die Steuersignale angeben, dass ein in der Aufnahmeposition befindliches Objekt personalisiert worden ist.

9. Vorrichtung nach einem der Ansprüche 1 bis 8, umfassend:
mindestens einen weiteren ersten Objektsablagebereich,
mindestens einen weiteren zweiten Objektablagebereich,
Mittel zum Bewegen eines Objekts zwischen dem mindestens einen ersten Objektablagebereich (24) und dem mindestens einen weiteren ersten Objektablagebereich, und
Mittel zum Bewegen eines Objekts zwischen dem mindestens einen zweiten Objektablagebereich (24) und dem mindestens einen weiteren zweiten Objektablagebereich.

10. Vorrichtung nach einem der Ansprüche 1 bis 8, umfassend:
mindestens einen weiteren ersten Objektablagebereich,
mindestens einen weiteren zweiten Objektablagebereich,
wobei das Lade-/Entlademittel ausgelegt ist,
um zwei Objekte aus mindestens zwei Aufnahmepositionen auf den mindestens einen ersten Objektablagebereich (24) und den mindestens einen weiteren ersten Objektablagebereich zu entladen, und um zwei Objekte aus dem mindestens einen zweiten Objektablagebereich (24) und dem mindestens einen weiteren zweiten Objektablagebereich in die mindestens zwei Aufnahmepositionen zu laden.

11. Vorrichtung nach einem der Ansprüche 1 bis 10, umfassend zwei Transportmodule (14, 84), die durch einen jeweiligen Antriebsmotor entlang Mitteln bewegt werden können, die einen linearen Verlagerungsweg festlegen,
wobei eine Position, an der das erste Objekt von einer vorgeschalteten Station einer Objektverarbeitungsanlage in die erste Objektanlage (24) aufgenommen wird und/oder das zweite Objekt des zweiten Objektablagebereichs (26) zu einer nachgeschalteten Station einer Objektverarbeitungsanlage übergeben wird, an einer Zwischenposition entlang der Mittel angeordnet ist, die den linearen Verlagerungsweg festlegen.

12. Vorrichtung nach einem der Ansprüche 1 bis 11, bei der die Mehrzahl von Aufnahmepositionen eine erste Mehrzahl von Aufnahmepositionen, die Mittel zum Einwirken auf ein Objekt in einer ersten Weise mit einem zugeordneten Transportmodul umfassen, und eine zweite Mehrzahl von Aufnahmepositionen umfasst, die Mittel zum Einwirken auf ein Objekt in einer zweiten Weise, die sich von der ersten Weise unterscheidet, mit einem zugeordneten Transportmodul umfassen.

13. Vorrichtung nach einem der Ansprüche 1 bis 11, bei der die Mehrzahl von Aufnahmepositionen eine erste Mehrzahl von Aufnahmepositionen mit einem zugeordneten Transportmodul und eine zweite Mehrzahl von Aufnahmepositionen mit einem zugeordneten Transportmodul, und Übergabemittel (54, 56) zum Übergeben eines Objekts von dem der ersten Mehrzahl zugeordneten Transportmodul zu dem der zweiten Mehrzahl zugeordneten Transportmodul umfasst.

14. Vorrichtung nach einem der Ansprüche 1 bis 8, die mehrere Stapel von Aufnahmepositionen (80, 82) umfasst, die nebeneinander angeordnet sind, wobei die mehreren Aufnahmepositionen, die einen Stapel der mehreren Stapel von Aufnahmepositionen (80; 82) bilden, vertikal übereinander angeordnet sind, und wobei für jeden Stapel der mehreren Stapel von Aufnahmepositionen (80, 82) ein Transportmodul (14; 84) vorgesehen ist.

15. Verfahren zur Handhabung von Objekten (34), mit den folgenden Schritten:
Bewegen eines Trägers (30), der ein Transportmodul (14; 84) trägt, mit Bezug auf eine Mehrzahl von Aufnahmepositionen (34f), um den Träger an einer Lade-/Entladeposition mit Bezug auf eine der Aufnahmepositionen zu positionieren, wobei das Transportmodul (14; 84) einen ersten Objektablagebereich (24), einen zweiten Objektablagebereich (26) und Lade-/Entlademittel (18, 20) umfasst;
**gekennzeichnet durch**
Bewegen des Lade-/Entlademittels (18, 20) an der Lade-/Entladeposition aus dem ersten Objektablagebereich (24) über eine zugeordnete Aufnahmeposition (34f) der Mehrzahl von Aufnahmepositionen in den zweiten Objektablagebereich (26) für gleichzeitiges Laden eines ersten Objekts aus dem ersten Objektablagebereich (24) in die zugeordnete Aufnahmeposition (34f) und Entladen eines zweiten Objekts aus der zugeordneten Aufnahmeposition (34f) in den zweiten Objektablagebereich (26).

## Revendications

1. Dispositif pour manipuler des objets (34), comprenant :
une pluralité de positions de réception (34f) qui sont conçues, chacune, afin de recevoir un objet (34) ;
au moins un module de transport (14 ; 84) comprenant :
au moins une première zone de stockage d'objet (24),
au moins une deuxième zone de stockage d'objet (26), et
des moyens de chargement/déchargement (18, 20) ;
le dispositif comprenant en outre des moyens d'entraînement (16) comprenant un support (30) supportant le au moins un module de transport (14 ; 84), dans lequel les moyens d'entraînement (16) sont prévus pour positionner le au moins un module de transport par rapport à la pluralité de positions de réception (34f), dans lequel la au moins une première zone de stockage d'objet (24), la au moins une deuxième zone de stockage d'objet (26) et les moyens de chargement/déchargement (18, 20) peuvent être positionnés dans une position de chargement/dëchargement par rapport à l'une des positions de réception par un mouvement du support (30) ;
**caractérisé en ce que :**
les moyens de chargement/déchargement (18, 20) sont conçus pour se déplacer, dans la position de chargement/déchargement, de la au moins une première zone de stockage d'objet (24) en passant par une position de réception associée (34f) de la pluralité de positions de réception, à la au moins une deuxième zone de stockage d'objet (26) pour charger simultanément un premier objet à partir de la au moins une première zone de stockage d'objet (24) dans la position de réception associée (34f) et décharger un deuxième objet de la position de réception associée (34f) dans la au moins une deuxième zone de stockage d'objet (26).

2. Dispositif selon la revendication 1, dans lequel les positions de réception comprennent chacune des moyens pour agir sur et en particulier pour personnaliser un objet présent dans ces derniers.

3. Dispositif selon la revendication 1 ou 2, dans lequel les moyens de chargement/déchargement (18, 20) comprennent une courroie sans fin (18) à laquelle sont fixés une pluralité de doigts d'entraînement (20) pour mettre en prise le premier et le deuxième objet.

4. Dispositif selon l'une quelconque des revendications 1 à 3, dans lequel les moyens d'entraînement (16) sont conçus pour déplacer le au moins un module de transport (14 ; 84) le long d'une trajectoire de déplacement linéaire.

5. Dispositif selon l'une quelconque des revendications 1 à 4, dans lequel les moyens de chargement/déchargement (18, 20) sont conçus afin de déplacer le premier objet et le deuxième objet dans une direction perpendiculaire à une direction de déplacement du au moins un module de transport (14 ; 84).

6. Dispositif selon l'une quelconque des revendications 1 à 5, dans lequel, à chaque position de réception, est associée une station de traitement (10), et dans lequel la première et la deuxième zone de stockage d'objet (24, 26) sont agencées avec un espace, de sorte que, lorsque le au moins un module de transport (14 ; 84) est déplacé le long d'une station de traitement (10), la station de traitement (10) passe au-delà de l'espace.

7. Dispositif selon l'une quelconque des revendications 1 à 6, dans lequel des moyens d'entraînement (16) sont conçus afin de déplacer le au moins un module de transport (14 ; 84) entre une position dans laquelle le premier objet est reçu à partir d'une position en amont d'une installation de traitement d'objet dans la première zone de stockage d'objet (24) et/ou le deuxième objet est transféré à partir de la deuxième zone de stockage d'objet (26) vers une station en aval d'une installation de traitement d'objet, et la position de chargement/déchargement par rapport à une position de réception.

8. Dispositif selon l'une quelconque des revendications 1 à 7, comprenant une unité de commande (70) pour les moyens d'entraînement (16),
dans lequel les moyens d'entraînement (16) sont conçus afin de positionner le au moins un module de transport dans la position de chargement/déchargement d'une position pouvant être sélectionnée librement parmi les nombreuses positions de réception,
dans lequel l'unité de commande (70) est conçue afin de sélectionner la position de réception pouvant être librement sélectionnée en fonction des signaux de commande qui indiquent si un objet peut être pris de la position de réception correspondante, et
dans lequel les signaux de commande indiquent qu'un objet présent dans la position de réception a été personnalisé.

9. Dispositif selon l'une quelconque des revendications 1 à 8, comprenant :
au moins une première zone de stockage d'objet supplémentaire ;
au moins une deuxième zone de stockage d'objet supplémentaire ;
des moyens pour déplacer un objet entre la au moins une première zone de stockage d'objet (24) et au moins une première zone de stockage d'objet supplémentaire ; et
des moyens pour déplacer un objet entre la au moins une deuxième zone de stockage d'objet (24) et la au moins une deuxième zone de stockage d'objet supplémentaire.

10. Dispositif selon l'une quelconque des revendications 1 à 8, comprenant :
au moins une première zone de stockage d'objet supplémentaire ;
au moins une deuxième zone de stockage d'objet supplémentaire ;
dans lequel les moyens de chargement/déchargement sont conçus afin de :
décharger deux objets à partir d'au moins deux positions de réception sur la au moins une première zone de stockage d'objet (24) et la au moins une première zone de stockage d'objet supplémentaire, et
charger deux objets à partir de la au moins une deuxième zone de stockage d'objet (24) et la au moins une deuxième zone de stockage d'objet supplémentaire dans les au moins deux positions de réception.

11. Dispositif selon l'une quelconque des revendications 1 à 10, comprenant deux modules de transport (14, 84) qui peuvent être déplacés par un moteur d'entraînement respectif le long des moyens fixant une trajectoire de déplacement linéaire,
dans lequel une position à laquelle le premier objet est reçu à partir d'une station en amont d'une installation de traitement d'objet dans la première installation d'objet (24) et/ou le deuxième objet de la deuxième zone de stockage d'objet (26) est transféré dans une station en aval d'une installation de traitement d'objet, est agencée dans une position intermédiaire le long des moyens fixant la trajectoire de déplacement linéaire.

12. Dispositif selon l'une quelconque des revendications 1 à 11, dans lequel la pluralité de positions de réception comprend une première pluralité de positions de réception, qui comprennent des moyens pour agir sur un objet d'une première manière, avec un module de transport associé, et une deuxième pluralité de positions de réception, qui comprennent des moyens pour agir sur un objet d'une deuxième manière, qui est différente de la première manière, avec un module de transport associé.

13. Dispositif selon l'une quelconque des revendications 1 à 11, dans lequel la pluralité de positions de réception comprend une première pluralité de positions de réception avec un module de transport associé et une deuxième pluralité de positions de réception avec un module de transport associé, et des moyens de transfert (54, 56) pour transférer un objet du module de transport associé à la première pluralité au module de transport associé à la deuxième pluralité.

14. Dispositif selon l'une quelconque des revendications 1 à 8, comprenant plusieurs piles de positions de réception (80, 82) agencées les unes à côté des autres, dans lequel les plusieurs positions de réception qui forment une pile des plusieurs piles de positions de réception (80 ; 82) sont agencées verticalement les unes au-dessus des autres, et dans lequel un module de transport (14 ; 84) est prévu pour chaque pile des plusieurs piles de positions de réception (80, 82).

15. Procédé pour manipuler des objets (34), avec les étapes suivantes consistant à :
déplacer un support (30) supportant un module de transport (14 ; 84) par rapport à une pluralité de positions de réception (34f), afin de positionner le support dans une position de chargement/déchargement par rapport à l'une des positions de réception, le module de transport (14 ; 84) comprenant une première zone de stockage d'objet (24), une deuxième zone de stockage d'objet (26) et des moyens de chargement/déchargement (18 ; 20) ;
**caractérisé par** l'étape consistant à :
déplacer les moyens de chargement/déchargement (18, 20) dans la position de chargement/déchargement, à partir d'une première zone de stockage d'objet (24) en passant par une position de réception associée (34f) de la pluralité de positions de réception à la deuxième zone de stockage d'objet (26) pour charger simultanément un premier objet de la première zone de stockage d'objet (24) dans la position de réception associée (34f) et décharger un deuxième objet de la position de réception associée (34f) dans la deuxième zone de stockage d'objet (26).
